# EUROPEAN PATENT SPECIFICATION

(11) **EP 2 999 754 B1**
(45) Date of publication and mention of the grant of the patent: **19.07.2017**
(21) Application number: 14733345.4
(22) Date of filing: 23.05.2014
(51) Int. Cl.: C09D 5/00

(54) **A COATING COMPOSITION FOR METAL SURFACES WITH ENHANCED CORROSION RESISTANCE PROPERTIES**
BESCHICHTUNGSZUSAMMENSETZUNG FÜR METALLOBERFLÄCHEN MIT VERBESSERTER KORROSIONSBESTÄNDIGKEIT
COMPOSITION DE REVÊTEMENT POUR SURFACES MÉTALLIQUES AYANT DES PROPRIÉTÉS AMÉLIORÉES DE RÉSISTANCE À LA CORROSION

(30) Priority: 23.05.2013 IT TO20130416
(43) Date of publication of application: 30.03.2016
(73) Proprietor: C.R.F. Società Consortile per Azioni, 10043 Orbassano (IT)
(72) Inventor: MARTORANA, Brunetto, I-10043 Orbassano (IT); RONCATO, Davide, I-10043 Orbassano (IT); BASSAN, Daniele, I-10043 Orbassano (IT); MICUCCI, Elisa, I-10043 Orbassano (IT)
(74) Representative: Bergadano, Mirko
(86) International application number: PCT/IB2014/061667
(87) International publication number: WO 2014/188390

(56) References cited:
- WO-A1-2007/008199
- WO-A1-2009/036790
- WO-A1-2013/083293
- WO-A2-2006/110961
- CN-A- 102 504 664

## Description

### TECHNICAL FIELD

The present invention relates to a coating composition for metal surfaces, in particular, for protecting metal surfaces from corrosion. More specifically, the present invention relates to a composition for at least partially coating the bodywork and/or chassis of motor vehicles.

### BACKGROUND ART

Corrosion is one of the main phenomena responsible for the progressive deterioration of metal structures and even their destruction. In the automotive field, the corrosive effects of certain atmospheric agents can have a very significant influence on useful life of a motor vehicle or, at the least, on some of its components.

Therefore, it is common practice to apply a polymer-based coating on metal surfaces that forms a protective barrier with the purpose of improving durability. However, it has been observed that in the case where this coating becomes damaged and corrosive agents can consequently penetrate in the coating layer and spread to the underlying metal surface, the degradation process advances, and then even more rapidly. Examples of these compositions are illustrated in WO2013083293, CN102504664, WO2009036790, WO2007008199 and WO2006110961. The compositions illustrated therein comprise particles of antioxidant materials dispersed in a polymer matrix.

At present, the main manufacturers in the automotive field subject metal components to an intricate and complex process that comprise a series of operations.

First of all, steel sheet metal panels are subjected to a galvanization process, via which a thin layer of zinc is formed on the surface that provides protection against cathodic corrosion of the panel.

A polymer layer approximately 5 µm thick is deposited on this base, which provides the galvanized steel with temporary corrosion protection. Normally, electrically conductive pigments, for example based on zinc or iron phosphide, are introduced into the polymer matrix to facilitate spot welding in the phase of forming and assembling the bodywork or the chassis of the motor vehicle.

Corrosion resistance is further improved by means of a phosphate coating process and the surface is prepared for the next treatment of electrophoretic deposition (cataphoresis).

The latter consists in the application of a further protective layer by means of immersion in a bath comprising, in general terms, a polymer resin and a plurality of agents (e.g. pigments, extenders and solvents).

In particular, the resin is selected to be water soluble in weakly acidic environments, so as to form a fairly stable suspension of micelles. The solvents are generally of two types: polar solvents soluble in water and water-insoluble solvents, which interact with the resin micelles, affecting the thickness of the applied film. Pigments and extenders, generally inorganic, determine the colour, appearance and corrosion resistance of the product. They are absorbed into the resin micelles during the preparation of the paint.

The actual deposition is obtained by applying an electrical potential (to the chassis), which causes the migration of the micelles towards the metal surface and the subsequent solidification of the coating, which is then usually polymerized in an oven. The coating obtained with this procedure performs a function of primary protection against corrosion.

In addition, it is customary to apply several layers that also have the function of giving the motor vehicle's surface certain aesthetic characteristics. To this end, first of all primer is usually applied, which performs two functions: on one hand it protects the layer deposited by cataphoresis from potential damage caused by exposure to UV radiation (as a rule, an opaque primer is therefore normally used), while on the other, it constitutes the base for the subsequent application of a layer (possibly applied in several coats) containing coloured pigments, possibly with added agents to provide effects such as metalized, pearlescent, etc.

Finally, a transparent finishing layer without any pigments is normally applied, which is essentially conceived to improve the looks of the motor vehicle, as well as constituting a further, final barrier against atmospheric agents. In this sense, efforts are continually made in the automotive field aimed at developing finishing coatings that have several functions, for example, increasing scratch resistance or even capabilities of scratch self-healing.

It is thus evident how, in general, the coating and painting process of the bodywork and chassis of a motor vehicle is particularly intricate and complex. By requiring the execution of numerous steps in succession, this process inevitably entails long processing times - including idle times between one step and another - and generates a lot of waste as well as consuming a significant amount of energy.

In general, there is therefore awareness in the sector of the need to simplify this process with the introduction of new coating compositions, for example, to be applied via cataphoresis according to a procedure of the above-described type.

In addition, the main manufacturers in the automotive sector feel the need to improve the performance of the coatings even further in terms of corrosion resistance, in particular with reference to the sharp edges and cavities commonly present in the bodywork and chassis of a motor vehicle. In this sense, the need is felt within the sector to provide new technologies that enable reducing the number and complexity of steps of the coating process, the thicknesses and other operating parameters, while maintaining or even improving the quality of corrosion protection, especially in certain critical areas.

Furthermore, the need is particularly felt for providing new coating compositions that possess self-healing abilities, so as to increase the durability of the corrosion protection and that of the coating in general.

### DISCLOSURE OF INVENTION

An object of the present invention is therefore that of providing a coating composition for metal surfaces, in particular for at least partially coating a motor vehicle's bodywork and/or chassis, capable of satisfying at least one of the above-stated needs.

This object is achieved by the present invention, in so far as it relates to a coating composition for metal surfaces according to claim 1.

Further characteristics and advantages of the present invention will be better understood from the following description of a preferred embodiment, which is provided by way of non-limitative example.

According to the present invention, a coating composition is provided for metal surfaces. Advantageously, the coating composition for metal surfaces according to the present invention comprises a matrix (for example, a polymer resin) and at least first and second functionalized nano-containers dispersed within the matrix.

Within the context of the present invention, the term "functionalized nano-container" means a volume of nanometric size containing an active substance confined within a porous core and/or a porous shell that, in normal conditions, prevent direct contact of the active substance with the external environment, but that, in the presence of an opportune trigger (defined by predetermined environmental conditions, such as a change in pH, ionic strength, humidity, brightness, temperature, mechanical stress or even activation of a magnetic or electromagnetic field), enable the release of the active substance into the external environment. These functionalized nano-containers consequently only release their content following an external stimulus, for example a change in pH due to a crack in the motor vehicle's paintwork.

The first and the second functionalized nano-containers advantageously contain respective active substances different from each other.

In particular, the first functionalized nano-containers contain a corrosion inhibitor agent as the active substance, which is able to suppress corrosion and delamination processes that typically occur around defects or sharp edges.

Furthermore, the second functionalized nano-containers contain one of the following as the active substance:
- an agent able to displace water (in a manner that will be explained further on) ; and
- a precursor of a polymerizable species, able to form a thin polymeric layer such as to cover a damaged area and/or repair a damaged layer and/or to prevent the propagation of a crack or other defect.

More in particular, the second functionalized nano-containers can comprise a core immiscible or poorly miscible in water and dispersible in an aqueous medium, or a core miscible in water and dispersible in a non-aqueous medium, and an active substance soluble in the core selected from sealants, lubricants, anti-fouling agents, hydrophobic materials (water displacement function), or even monomers and adhesives.

Preferably, the first and second nano-containers have sizes between 1 and 1000 nm and comprise a polymer or polyelectrolyte shell (for example, composed of multilayer electrolytic structure obtained via a layer-by-layer, or LbL, deposition technique) such as to have permeability that is variable in response to an environmental factor such as a change in pH, ionic strength, humidity, brightness, temperature, or even activation of a magnetic or electromagnetic field.

More preferably, the shell of the first nano-containers is sensitive to change in pH, given that, as is known, corrosion phenomena are typically associated with localized changes in pH in the anode and cathode areas.

The polymer shell (for example, gelatinous) or polyelectrolyte shell (for example, based on poly(allylamine) and/or polystyrene sulfonate) can form a nano-capsule inside which a corrosion inhibitor can be contained (for example, quinaldic acid, mercaptobenzothiazole or derivatives). In alternative, this shell could form the coating of a nanometric-scale sublayer, such as, for example, nanometric particles of metals or metal oxides, synthetic or natural nanotubes (for example, aluminosilicates). For example, natural nanotubes based on halloysite or even nano-composites of the layered double hydroxide (LDH) type, for example LDH Al-Zn, can be advantageously used.

The substrate can be porous or hollow and the inhibitor can be incorporated in the cavity or the pores of the substrate or in the shell, in which case the substrate only acts as a support for the polymer or electrolyte shell. Examples of support substrates can be materials commonly used in coating compositions, such as, for example, nano-particles of silica, zirconium, etc.

The polymer or polyelectrolyte shell of the first nano-containers can comprise one or more layers of a suitable polymer or polyelectrolyte that is sensitive to a trigger factor and able to release the corrosion inhibitor in response to a given variation in this trigger factor.

In practice, the polymer or polyelectrolyte can, for example, be selected from the group composed of polyalkylene imines, polystyrene sulfonate, poly(allylamine), polyvinyl alcohol, polystyrene, polyalkylene glycol, biopolymers and poly-amino acids, such as gelatine, agarose, cellulose, alginic acid, casein, polyarginine, polyglycine and polyaspartic acid, or derivatives obtained by modifying these compounds or introducing specific functional groups according to known methods. These groups, for example, can give the polymer or polyelectrolyte shell desirable properties such as hydrophily, hydrophobia, electrical charge, sensitivity to a given trigger factor, etc.

The polymer or polyelectrolyte shell could also comprise copolymers or mixtures of polymers or polyelectrolytes.

Advantageously, the composition enables freeing the active substances, and the corrosion inhibitor agent in particular, only after a specific trigger condition, caused for example by the formation of scratches that allow the penetration of corrosive agents. This composition therefore constitutes a protective layer that can be activated following trigger events, thereby creating a further corrosion barrier.

The composition preferably comprises third functionalized nano-containers containing, as the active substance, one of the following that is not contained as the active substance in the second functionalized nano-containers:
- a precursor of a polymerizable species, able to form a thin polymeric layer such as to cover a damaged area and/or repair a damaged layer and/or prevent the propagation of a crack or other defect; and
- a precursor of a polymerizable species, (in a manner that will be explained further on).

Even more preferably, the composition also comprises nano-traps able to incorporate certain potentially harmful, aggressive or corrosive molecules (for example, molecules of water, corrosive anions, etc.).

Within the context of the present invention, the term "nano-trap" means a volume of nanometric size defined in a porous core and/or shell that, when the concentration of certain chemical species exceeds a given threshold value, is able to selectively absorb these species, preventing them from returning to the external environment.

More specifically, the nano-traps can be substantially formed by a shell of an empty nano-container. Alternatively, they can be formed by particles of swelling clays.

Preferably, structured and LDH cationic clays can be used for the nano-traps.

From examination of the characteristics of the coating composition according to the present invention, and with reference to the examples that follow, the advantages that can be achieved therewith are evident.

In particular, the coating composition according to the present invention enables increasing the useful life of a metal structure (in particular the bodywork and/or chassis of a motor vehicle), with a reduction in maintenance costs associated with reduced instances of corrosion, especially in the first period of the metal structure's life. In addition, the coating composition according to the present invention is particularly effective in preventing corrosion around sharp edges and cavities.

Furthermore, a reduction in production cost is made possible, given that the number of operations necessary for painting a motor vehicle can be reduced by being able to unify the cataphoresis coating operations with the application of corrosion protection.

Finally, it is clear that modifications and variants can be made to the coating composition described and illustrate herein without departing from the scope of appended independent claims.

### BEST MODE FOR CARRYING OUT THE INVENTION

The invention is further described with reference to the following non-limitative examples of embodiment.

### EXAMPLE 1

### Zn-Al-NO₃ LDH - dispersion in paint by cataphoresis

The nano-containers were supplied in the form of an aqueous suspension. LDHs were used with nitrate groups obtained via calcination-rehydration of synthetic hydrotalcite.

The dispersion properties were evaluated by introducing the nano-containers in demineralised water and in the pigment paste normally used for cataphoresis painting.

### GRAVIMETRIC TEST

A gravimetric test was performed on the aqueous suspension in order to evaluate the water:LDH ratio.

2.45 g of aqueous suspension was kept in an oven at 60°C for 5 hours to make the water slowly evaporate. In this way, 0.75 g of LDH was obtained, equal to approximately 30.6% by weight.

### DISPERSION TEST IN DEMINERALISED WATER

15.30 g of LDH aqueous suspension was introduced into 150 g of demineralised water. The solution was agitated for 5 hours. A whitish solution was obtained, which was left for 3 days to settle. The total separation between the solid phase (nano-containers) and the water was then observed.

The same suspension was then exposed to ultrasound by means of a 6-mm-diameter sonication probe for 10 minutes at 20% power. In this way, a substantially clear solution was obtained.

This solution was left to settle. After 24 hours, the presence of a solid deposit on the bottom of the container was observed. For this reason, the solution was subjected to a second sonication treatment in order to improve the dispersion of the nano-containers. This second treatment, always with the 6-mm-diameter sonication probe, but at 30% power, was performed for 20 minutes.

Also in this case, after 24 hours of settling, it was possible to observe the formation of a solid deposit on the bottom of the container.

### DISPERSION TEST IN PIGMENT PASTE FOR CATAPHORESIS PAINTING

18.51 g of LDH aqueous suspension was introduced into 20 g of pigment paste. Agitation was not possible as the viscosity of the system was too high, and so 20 ml of demineralised water was added. The thus obtained suspension was sonified with the 6-mm-diameter probe for 10 minutes at 20% power.

A system still having a doughy consistency had been obtained and so another 20 ml of demineralised water was added. The thus obtained diluted system was subjected to a second sonication and agitation treatment, which did not however give different results.

A third treatment was then performed after having added a further 20 ml of demineralised water, keeping the system agitated following a pulsed profile (agitation for 60 seconds alternated with 60 seconds without agitation). A two-phase system was still obtained, but the dispersion of the nano-containers in the pigment paste can be considered satisfactory.

### EXAMPLE 2

### Nano-capsules (shells) of polyurea containing methylbenzotriazole as the active substance

The nano-containers, supplied in solid form (powder), are formed by nano-capsules containing methylbenzotriazole as a corrosion inhibitor.

5.55 g of nano-containers were introduced into 6 g of pigment paste. Due to the viscosity being too high, agitation of the system was not possible, and therefore 10 ml of demineralised water was added. The thus obtained suspension was agitated for 2 hours. A system still having a doughy consistency had been obtained and so the system was sonified with the 6-mm-diameter probe for 10 minutes at 20% power.

After 24 hours, the system was still two-phase, but the suspension of the nano-containers inside the pigment paste was good.

### EXAMPLE 3

### Zn-Al LDH and Mg-Al-MBT LDH with methylbenzotriazole (MBT) as the active substance

The nano-containers were supplied in the form of an aqueous suspension (solid content equal to 18.3% by weight) and formed by LDH containing methylbenzotriazole, a corrosion inhibitor, as the active substance.

5.55 g of nano-containers were introduced into 6 g of pigment paste. Due to the viscosity being too high, agitation of the system was not possible, and so 10 ml of demineralised water was added. The thus obtained suspension was agitated and sonified with the 6-mm-diameter probe for 10 minutes at 20% power.

After 24 hours, the system was still two-phase, but the suspension of the nano-containers inside the pigment paste was good.

### EXAMPLE 4

### Zn-Al LDH

The nano-containers were supplied in the form of an aqueous suspension (solid content equal to 27% by weight) and formed by LDH containing methylbenzotriazole, a corrosion inhibitor, as the active substance.

5.55 g of nano-containers were introduced into 6 g of pigment paste. Due to the viscosity being too high, agitation of the system was not possible, and so 10 ml of demineralised water was added. The thus obtained suspension was agitated and sonified with the 6-mm-diameter probe for 10 minutes at 20% power.

After 24 hours, the system was still two-phase, but the suspension of the nano-containers inside the pigment paste was good.

## Claims

1. A coating composition for metal surfaces comprising a polymer matrix and at least first and second functionalized nano-containers dispersed in the matrix, said first and second functionalized nano-containers containing respective active substances different from each other, wherein each of said first and second functionalized nano-containers defines a volume of nanometric size containing said active substance confined within a porous core and/or a porous shell that, in normal conditions, prevent the direct contact of the active substance with the external environment, while, in predetermined triggering conditions, allow the release of the active substance into the external environment.

2. The composition according to claim 1, **characterized in that** said first functionalized nano-containers contain a corrosion inhibitor agent as the active substance.

3. The composition according to claim 1 or 2, **characterized in that** said second functionalized nano-containers contain one of the following as the active substance:
- an agent able to displace water; and
- a precursor of a polymerizable species, able to form a polymeric layer such as to cover a damaged area and/or prevent the propagation of a crack or other defect.

4. The composition according to claim 3, **characterized in that** said second functionalized nano-containers contain, as the active substance, a core immiscible or poorly miscible in water and dispersible in an aqueous medium, or a core miscible in water and dispersible in a non-aqueous medium, and an active substance soluble in the core selected from sealants, lubricants, anti-fouling agents, hydrophobic materials or even monomers and adhesives.

5. The composition according to any of claims 1 to 4, **characterized in that** said first and second nano- containers have a size comprised between 1 and 1000 nm and comprise a polymeric or polyelectrolytic or ceramic shell, such as to have permeability that is variable in response to an environmental factor such as a change in pH, ionic strength, humidity, brightness, temperature, mechanical stress or even activation of a magnetic or electromagnetic field.

6. The composition according to any of claims 1 to 5, **characterized by** also comprising third functionalized nano-containers containing, as the active substance, one of the following that is not contained as the active substance in said second functionalized nano-containers:
- a precursor of a polymerizable species, able to form a thin polymeric layer such as to cover a damaged area and/or repair a damaged layer and/or prevent the propagation of a crack or other defect; and
- an agent able to displace water.

7. The composition according to any of claims 1 to 6, **characterized by** comprising nano-traps able to incorporate potentially harmful, corrosive or abrasive molecules.

8. The composition according to claim 7, **characterized in that** said nano-traps are formed by a shell of an empty nano-container or by particles of a swelling clay.

## Patentansprüche

1. Beschichtungszusammensetzung für Metallflächen, umfassend eine Polymermatrix und mindestens erste und zweite funktionalisierte Nano-Behälter, die in der Matrix dispergiert sind, wobei die ersten und zweiten funktionalisierten Nano-Behälter jeweils aktive Substanzen enthalten, die voneinander verschieden sind, wobei jeder der ersten und zweiten funktionalisierten Nano-Behälter ein Volumen nanometrischer Größe definiert, das die aktive Substanz innerhalb eines porösen Kerns und/oder eines porösen Mantels eingeschlossen enthält, der unter normalen Bedingungen den direkten Kontakt der aktiven Substanz mit der externen Umgebung verhindert, während er unter vorbestimmten Auslösebedingungen das Freisetzen der aktiven Substanz in die externe Umgebung gestattet.

2. Zusammensetzung nach Anspruch 1, **dadurch gekennzeichnet, dass** die ersten funktionalisierten Nano-Behälter ein korrosionsverhinderndes Mittel als aktive Substanz enthalten.

3. Zusammensetzung nach Anspruch 1 oder 2, **dadurch gekennzeichnet, dass** die zweiten funktionalisierten Nano-Behälter eines der Folgenden als aktive Substanz enthalten:
- ein Mittel, das in der Lage ist, Wasser zu verdrängen; und
- einen Vorläufer einer polymerisierbaren Spezies, der in der Lage ist, eine polymere Schicht zu bilden, um einen beschädigten Bereich zu bedecken und/oder das Ausbreiten eines Risses oder anderen Defekts zu verhindern.

4. Zusammensetzung nach Anspruch 3, **dadurch gekennzeichnet, dass** die zweiten funktionalisierten Nano-Behälter als aktive Substanz einen Kern, der mit Wasser nicht oder schlecht mischbar und in einem wässrigen Medium dispergierbar ist, oder einen Kern, der mit Wasser mischbar und in einem nichtwässrigen Medium dispergierbar ist, und eine aktive Substanz, die in dem Kern löslich ist, ausgewählt unter Versiegelungsmitteln, Schmiermitteln, Verschmutzung verhindernden Mitteln, hydrophoben Materialien oder sogar Monomeren und Klebstoffen, enthalten.

5. Zusammensetzung nach einem der Ansprüche 1 bis 4, **dadurch gekennzeichnet, dass** die ersten und zweiten Nano-Behälter eine Größe zwischen 1 und 1000 nm aufweisen und einen polymeren oder polyelektrolytischen oder Keramikmantel umfassen, um eine Durchlässigkeit aufzuweisen, die als Reaktion auf einen Umweltfaktor, wie eine Änderung des pH-Werts, der Ionenstärke, Feuchte, Helligkeit, Temperatur, mechanische Beanspruchung oder sogar Aktivierung eines magnetischen oder elektromagnetischen Felds variabel ist.

6. Zusammensetzung nach einem der Ansprüche 1 bis 5, **dadurch gekennzeichnet, dass** sie auch dritte funktionalisiert Nano-Behälter umfasst, die als aktive Substanz eines der Folgenden enthalten, das nicht als aktive Substanz in den zweiten funktionalisierten Nano-Behältern enthalten ist:
- einen Vorläufer einer polymerisierbaren Spezies, der in der Lage ist, eine dünne polymere Schicht zu bilden, um einen beschädigten Bereich zu bedecken und/oder eine beschädigte Schicht zu reparieren und/oder das Ausbreiten eines Risses oder anderen Defekts zu verhindern; und
- ein Mittel, das in der Lage ist, Wasser zu verdrängen.

7. Zusammensetzung nach einem der Ansprüche 1 bis 6, **dadurch gekennzeichnet, dass** sie Nano-Fallen umfasst, die in der Lage sind, potentiell schädliche, korrosive oder abrasive Moleküle zu integrieren.

8. Zusammensetzung nach Anspruch 7, **dadurch gekennzeichnet, dass** die Nano-Fallen durch einen Mantel eines leeren Nano-Behälters oder durch Teilchen eines Quelltons gebildet werden.

## Revendications

1. Composition de revêtement pour surfaces métalliques, comprenant une matrice polymère et au moins des premiers et deuxièmes nano-récipients fonctionnalisés dispersés dans la matrice, lesdits premiers et deuxièmes nano-récipients fonctionnalisés contenant respectivement des substances actives différentes l'une de l'autre, dans laquelle chacun desdits premiers et deuxièmes nano-récipients fonctionnalisés définit un volume de dimension nanométrique contenant ladite substance active confinée à l'intérieur d'un coeur poreux et/ou d'une enveloppe poreuse qui, dans des conditions normales, préviennent le contact direct de la substance active avec l'environnement externe tout en permettant, dans des conditions de déclenchement prédéterminées, la libération de la substance active jusque dans l'environnement externe.

2. Composition selon la revendication 1, **caractérisée en ce que** lesdits premiers nano-récipients fonctionnalisés contiennent un agent inhibiteur de corrosion en tant que substance active.

3. Composition selon la revendication 1 ou 2, **caractérisée en ce que** lesdits deuxièmes nano-récipients fonctionnalisés contiennent l'un des suivants en tant que substance active :
- un agent apte à déplacer l'eau ; et
- un précurseur d'une espèce polymérisable, apte à former une couche polymère telle qu'elle recouvre une zone endommagée et/ou prévient la propagation d'une fissure ou d'un autre défaut.

4. Composition selon la revendication 3, **caractérisée en ce que** lesdits seconds nano-récipients fonctionnalisés contiennent, en tant que substance active, un coeur immiscible ou peu miscible à l'eau et dispersible dans un milieu aqueux, ou un coeur miscible à l'eau et dispersible dans un milieu non aqueux, et une substance active soluble dans le coeur, choisie parmi les produits d'étanchéité, les lubrifiants, les agents antisalissure, les matériaux hydrophobes ou même les monomères et les adhésifs.

5. Composition selon l'une quelconque des revendications 1 à 4, **caractérisée en ce que** lesdits premiers et deuxièmes nano-récipients ont une dimension comprise entre 1 et 1000 nm et comprennent une enveloppe polymère ou polyélectrolytique ou céramique, de façon à avoir une perméabilité qui est variable en réponse à un facteur environnemental tel qu'un changement de pH, de force ionique, d'humidité, de luminosité, de température, de contrainte mécanique ou même une activation d'un champ magnétique ou électromagnétique.

6. Composition selon l'une quelconque des revendications 1 à 5, **caractérisée en ce qu'**elle comprend aussi des troisièmes nano-récipients fonctionnalisés contenant, en tant que substance active, l'un des suivants qui n'est pas contenu en tant que substance active dans lesdits deuxièmes nano-récipients fonctionnalisés :
- un précurseur d'une espèce polymérisable, apte à former une couche polymère mince telle qu'elle recouvre une zone endommagée et/ou répare une couche endommagée et/ou prévient la propagation d'une fissure ou d'un autre défaut ; et
- un agent apte à déplacer l'eau.

7. Composition selon l'une quelconque des revendications 1 à 6, **caractérisée en ce qu'**elle comprend des nano-pièges aptes à incorporer des molécules potentiellement nocives, corrosives ou abrasives.

8. Composition selon la revendication 7, **caractérisée en ce que** lesdits nano-pièges sont formés d'une enveloppe d'un nano-récipient vide ou de particules d'une argile gonflante.
